**Europäisches Patentamt**

**European Patent Office**

**Office européen des brevets**

(11) Numéro de publication : **0 170 537**
**B1**

(12) # FASCICULE DE BREVET EUROPÉEN

(45) Date de publication du fascicule du brevet :
**02.12.87**

(51) Int. Cl.⁴ : **C 08 F210/16**

(21) Numéro de dépôt : **85401018.8**

(22) Date de dépôt : **23.05.85**

(54) **Procédé de fabrication d'un copolymère éthylène-butène-1 à partir d'éthylène.**

(30) Priorité : **08.06.84 FR 8409179**

(43) Date de publication de la demande :
**05.02.86 Bulletin 86/06**

(45) Mention de la délivrance du brevet :
**02.12.87 Bulletin 87/49**

(84) Etats contractants désignés :
**DE FR GB IT**

(56) Documents cités :
**FR-A- 2 405 961**
**US-A- 3 911 042**

(73) Titulaire : **INSTITUT FRANCAIS DU PETROLE**
**4, Avenue de Bois-Préau**
**F-92502 Rueil-Malmaison (FR)**

(72) Inventeur : **Commereuc, Dominique**
**32, rue Abel Vacher**
**F-92190 Meudon (FR)**
Inventeur : **Hugues, François**
**2, Av. Félix Faure**
**F-92000 Nanterre (FR)**
Inventeur : **Le Quan, Nhuong**
**20, Allée des Acacias**
**F-78410 Aubergenville (FR)**
Inventeur : **Taouli, Adberrahim**
**32, rue Sophie Rodrigues**
**F-92500 Rueil-Malmaison (FR)**

## Description

L'objet de la présente invention est un procédé pour la dimérisation de l'éthylène en butène-1 et la copolymérisation de l'éthylène avec le butène-1 pour l'obtention de polyéthylène linéaire de basse densité.

On connaît de nombreux procédés pour l'obtention de copolymères de l'éthylène avec le butène-1, qui opèrent soit en phase gazeuse sans solvant, soit en phase liquide ; ces procédés présentent de multiples avantages par rapport aux anciennes méthodes, tels l'activité spécifique élevée du catalyseur employé, les économies d'énergie ou les schémas simplifiés de mise en œuvre. Dans la pratique il est cependant souvent difficile de se procurer du butène-1 de la pureté qui permettrait de bénéficier de tous les avantages de ces nouveaux procédés.

En effet, le butène-1 est le plus souvent obtenu par extraction d'une coupe oléfinique de craquage et contient inévitablement des quantités plus ou moins importantes des contaminants qui composent cette coupe, par exemple de l'isobutène, du butadiène, du butène-2, du butane et/ou des hydrocarbures acétyléniques qui sont, soit des agents de désactivation du catalyseur, soit des modificateurs de poids moléculaire, soit tout simplement des composés inertes qui alourdissent les recyclages.

Un moyen d'obtenir du butène-1 beaucoup plus pur est de le préparer par dimérisation sélective de l'éthylène ; le principe d'un tel procédé a été décrit par K. Ziegler dans le brevet US 2 943 125 et a été considérablement amélioré par l'utilisation de certaines techniques telles que celles décrites dans la demande de brevet européen EP-A-135441 qui préconisent l'emploi comme catalyseur d'un titanate d'alkyle, d'un trialkylaluminium et d'un modificateur utilisés dans des rapports et selon une mise en œuvre précise.

Ce moyen apportait déjà une amélioration sensible au procédé de copolymérisation grâce à l'emploi de la même matière de départ, l'éthylène, et en raison de la pureté du butène-1 produit ; mais il nécessitait par contre l'implantation à côté de l'installation de copolymérisation d'un deuxième procédé nécessitant son propre catalyseur, ses systèmes d'élimination des composés minéraux, de fractionnement de l'éthylène, du butène et des oligomères inévitables, et de recyclages.

Or, il a été maintenant trouvé que le catalyseur à base de titane qui a servi à la dimérisation de l'éthylène en butène-1 et qui est entièrement soluble dans le milieu liquide de la réaction constitue un élément de choix pour la préparation d'un catalyseur hautement actif pour la polymérisation de l'éthylène et la copolymérisation de l'éthylène avec le butène-1, tant dans les procédés en phase vapeur à basse température que dans les procédés à haute température, c'est-à-dire au-delà de 140 °C, température à partir de laquelle le polymère est soluble dans les hydrocarbures ou à l'état fondu.

Grâce à cette découverte, il est maintenant possible d'intégrer les deux procédés de façon tout à fait complémentaire ne nécessitant pas d'élimination de catalyseur, de séparations coûteuses ou de recyclages. L'activité du catalyseur dans chacune des deux étapes se trouve particulièrement bien adaptée à une intégration puisque dans sa phase de dimérisation il est susceptible de produire entre 20 et 100 kg de butène-1 par g de titane engagé et que dans sa phase de polymérisation il peut produire de 200 à 1 000 kg par g de titane d'un copolymère éthylène-butène-1 contenant environ 10 % en poids de butène-1 une telle activité permet d'éliminer la phase de déminéralisation et de laisser la totalité des éléments du catalyseur dans le polymère.

Le procédé de préparation d'un copolymère éthylène-butène-1 selon la présente invention comprend les étapes suivantes :

a) dimérisation de l'éthylène en butène-1 par mise en contact de l'éthylène avec une solution d'un catalyseur résultant de l'interaction d'au moins un titanate d'alkyle et d'au moins un composé d'aluminium de formule $AlR_3$ ou $AlR_2H$ dans laquelle chacun des restes R est un radical hydrocarbyle ;

b) mise en contact d'au moins une partie de l'effluent de l'étape a) ladite partie contenant en solution au moins une partie du catalyseur de dimérisation, avec au moins un composé inorganique d'au moins un métal choisi dans le groupe formé par le magnésium et l'aluminium, ledit composé inorganique étant au moins en partie insoluble, de manière à obtenir un précipité constitué par ledit composé inorganique imprégné par les éléments du catalyseur de dimérisation ;

c) lorsqu'un composé halogéné de l'aluminium n'est pas déjà présent dans le mélange obtenu à l'étape b), mise en contact dudit précipité avec au moins un composé halogéné de l'aluminium de formule $Al_2R'_{6-n}X_n$ dans laquelle R' est un radical hydrocarbyle, X un atome d'halogène et n un nombre de 3 à 6 ;

d) mise en contact du produit obtenu à l'étape c) ou du produit obtenu à l'étape b) formé par au moins un composé inorganique au moins en partie insoluble, au moins un composé halogéné de l'aluminium et au moins un composé du titane avec de l'éthylène et du butène-1 au sein du réacteur de polymérisation.

Selon le procédé de la présente invention, le catalyseur de dimérisation est obtenu par l'interaction, dans un solvant hydrocarboné et de préférence dans un des produits de la réaction, d'au moins un titanate d'alkyle et d'au moins un composé d'aluminium de formule $AlR_3$ ou $AlR_2H$ dans laquelle chacun des restes R est un radical hydrocarbyle et de préférence en présence d'au moins une base telle qu'un éther.

Le catalyseur de polymérisation comprend :

a) le complexe formé ci-dessus et ayant servi à la dimérisation de l'éthylène en butène-1,

b) au moins un support inorganique tel qu'un composé inorganique insoluble par exemple un oxyde ou un halogénure métallique ou leur mélange,

c) au moins un halogénure d'alkylaluminium ou un halogénure d'aluminium.

Sans vouloir se lier par une quelconque théorie, on peut admettre que la sélectivité de la dimérisation est assurée par une forme tétravalente du titane, tandis que les composés minéraux et en particulier les halogénures minéraux, décomposent le Ti$^{IV}$ en Ti$^{III}$ qui est la forme active du catalyseur de polymérisation.

Les composés du titane utilisables selon l'invention répondent à la formule générale Ti(OR")$_4$ dans laquelle R" est un radical alkyle, ayant par exemple de 2 à 10 atomes de carbone, linéaire ou ramifié, cyclique ou acyclique, saturé ou insaturé. On peut utiliser par exemple le titanate de tétraéthyle, le titanate de tétrapropyle, le titanate de tétraisopropyle, le titanate de tétra-n-butyle, le titanate de tétra-2-éthyl-hexyle, le titanate de tétraoctyle.

Les composés de l'aluminium utilisables dans la préparation du catalyseur de dimérisation sont représentés par les formules générales AlR$_3$ ou AlR$_2$H dans lesquelles R a la même définition que R" ci-dessus ; on peut utiliser par. exemple le triéthylaluminium, le triisobutylaluminium, le tripropylaluminium, le trihexylaluminium, le triisohexylaluminium ou l'hydrure de diisobutylaluminium.

De préférence, le catalyseur de dimérisation contient un troisième composant qui est de préférence un éther cyclique ou acyclique. On peut utiliser par exemple l'éther diéthylique, l'éther diméthylique, le méthyl-tertiobutyléther et le dihydropyranne ; de manière préférée, on utilise le tétrahydrofuranne, le méthyl-2 tétrahydrofuranne ou le dioxanne-1,4.

Ces trois éléments sont mis en œuvre dans des rapports molaires Al/Ti compris entre 2 et 5 et éther/Ti compris entre 1 et 30 ; ils sont mélangés dans un hydrocarbure saturé ou insaturé tels que le pentane, l'hexane, l'heptane ou dans les trimères ou tétramères sous-produits de la réaction de dimérisation tels que l'éthyl-2 butène-1, l'hexène-1, le méthyl-3 pentène-1 ou leurs mélanges ; la température d'interaction étant comprise entre — 30 et + 60 °C.

Le composé inorganique insoluble utilisable comme support pour la préparation du catalyseur de polymérisation peut être un oxyde métallique tels que par exemple l'oxyde d'aluminium ou l'oxyde de magnésium sous leurs différentes formes ; on peut également utiliser le silicate d'aluminium ou le carbonate de magnésium. Mais on utilisera de préférence un halogénure de magnésium et plus particulièrement le chlorure ou le bromure de magnésium. Ces derniers peuvent être obtenus dans un état de dispersion élevé soit par broyage du chlorure ou du bromure de magnésium tels qu'obtenus par les voies classiques de la chimie minérale, soit par réaction d'un composé organique du magnésium, par exemple un organomagnésien, sur un composé halogéné.

Dans ce dernier cas les composés organomagnésiens préférés sont les dialkylmagnésiums de formule générale Mg R$_1$ R$_2$ ou leurs produits d'association avec les trialkylaluminium tels que Mg R$_1$ R$_2$.AlR$_3$ solubles dans les hydrocarbures, les radicaux R$_1$ et R$_2$ étant définis comme le radical R ci-dessus mentionné. On peut utiliser par exemple le butyl-isobutyl-magnésium, l'isopropyl-butyl-magnésium, le dihexyl-magnésium, l'octyl-butylmagnésium, le diphénylmagnésium ou le dibenzylmagnésium.

Les composés halogénés utilisables selon l'invention sont :

a) les hydracides halogénés à l'état anhydre tels que par exemple l'acide chlorhydrique et l'acide bromhydrique ;

b) les halogénures organiques de formule générale RX dans laquelle X représente un atome d'halogène (fluor, brome, chlore ou iode), et de préférence le chlore ou le brome R étant défini comme ci-dessus. Sont particulièrement bien adaptés les composés à halogène mobile tels que les halogénures allyliques, benzyliques, par exemple le chlorure d'allyle et le chlorure de benzyle ; le chlorure d'éthyle, le bromure de butyle et le chlorure de t-butyle. On peut aussi utiliser les hydrocarbures polyhalogénés tels que, par exemple, le tétrachlorure de carbone, le dichlorométhane et le bromoforme ; les halogénures d'acides tels que, par exemple, le chlorure d'acétyle et le chlorure de propionyle ;

c) les halogénures minéraux.

Ceux-ci comprennent les halogénures métalliques tels que, par exemple, les halogénures d'aluminium, de bore, d'étain, de mercure et les complexes que font ces halogénures avec les bases ; les composés que font les halogènes avec les métalloïdes tels que les halogénures de soufre ou de phosphore. Parmi ces composés, on utilisera de préférence le trichlorure d'aluminium, le trichlorure de bore, le tétrabromure d'étain, le dichlorure de mercure, le trichlorure de phosphore ou le chlorure de sulfuryle.

On peut également utiliser comme composés d'halogénation les halogénures d'aluminium ou les halogénures d'alkylaluminium utilisés comme troisième composant de la formule catalytique de polymérisation.

L'halogénure d'aluminium ou l'halogénure d'alkylaluminium utilisés pour la formation du catalyseur de polymérisation répond à la formule générale Al$_2$R'$_{6-n}$X$_n$ dans laquelle R' a la même définition que R" ci-dessus, X est un halogène et de préférence le brome ou le chlore et n prend des valeurs égales à 3, 4, 5 ou 6. Parmi ces composés, on citera plus particulièrement le chlorure d'aluminium, le dichloroéthylaluminium, le sesquichlorure d'éthylaluminium et le dichloroisobutylaluminium.

Les composants du catalyseur de polymérisation sont de préférence mis en œuvre dans des

proportions telles que 1 millimole de titane contenue dans le catalyseur ayant servi à la dimérisation, sera mise en contact avec une quantité de support comprise entre environ 0,1 et environ 100.

La quantité d'halogénure d'aluminium ou d'halogénure d'alkylaluminium introduite sera telle que le rapport molaire ion halogénure/aluminium total soit compris entre environ 0,5 et environ 1,5, et le rapport molaire aluminium total/titane soit compris entre environ 2,5 et environ 25. La technique opératoire préférée selon l'invention est décrite ci-après.

On réalise la dimérisation de l'éthylène à l'aide du catalyseur préparé comme ci-dessus, soit en système semi-ouvert, soit en système ouvert en mettant en contact ledit catalyseur avec de l'éthylène sous une pression de 0,5 à 5 MPa et à une température comprise entre 20 et 80 °C. Après des durées de réaction pouvant aller de 0,5 à 10 h, le produit de réaction qui contient de l'éthylène, le butène-1, les hexènes, les octènes et le catalyseur dissous peut être soumis à plusieurs modes de traitements.

Selon un premier mode, on sépare par une première distillation l'éthylène et le butène-1 qui sont envoyés, avec la quantité complémentaire d'éthylène frais requise par la composition du copolymère, au réacteur de polymérisation. Une seconde distillation permet de récupérer en tête la majeure partie des hexènes qui sont pour partie, utilisés pour la préparation du catalyseur de dimérisation et pour partie éliminés ; le reste de la solution qui contient les octènes, une partie des hexènes et le catalyseur de dimérisation en solution, est mise en contact avec le support minéral jusqu'à décoloration. Le support ainsi imprégné par le titane est éventuellement isolé par toute méthode classique telle que par exemple la filtration ou la centrifugation, puis éventuellement lavé par un hydrocarbure aliphatique saturé ou par du butène-1 ; il est ensuite éventuellement traité par au moins un halogénure d'aluminium ou un halogénure d'alkylaluminium si un composé halogéné de l'aluminium n'est pas déjà présent, et envoyé au réacteur de polymérisation.

Selon un deuxième mode, on met en contact la totalité de l'effluent de la dimérisation avec le support minéral, jusqu'à décoloration de la solution. Puis on sépare le support ainsi imprégné, on le lave éventuellement avec un hydrocarbure aliphatique saturé ou avec du butène-1. On soumet l'ensemble des hydrocarbures issus de ce traitement à une distillation fractionnée : l'éthylène et le butène-1 sont envoyés, avec la quantité complémentaire requise d'éthylène frais, au réacteur de polymérisation ; les hexènes et les octènes sont pour partie, recyclés pour servir à la préparation du catalyseur de dimérisation et pour partie, éliminés. Le support imprégné du catalyseur ayant servi à la dimérisation est éventuellement traité par au moins un halogénure d'aluminium ou un halogénure d'alkylaluminium si un composé halogéné de l'aluminium n'est pas déjà présent, et envoyé au réacteur de polymérisation.

Selon un troisième mode on met en contact la totalité de l'effluent de dimérisation avec le support minéral jusqu'à décoloration de la solution, la suspension catalytique ainsi obtenue est alors éventuellement traitée par au moins un halogénure d'aluminium ou un halogénure d'alkylaluminium si un composé halogéné de l'aluminium n'est pas déjà présent. L'ensemble contenant l'éthylène, le butène-1, les hexènes, les octènes et le catalyseur en suspension formé par au moins un support inorganique, au moins un composé halogéné de l'aluminium et au moins un composé du titane, est envoyé en totalité au réacteur de polymérisation, avec une quantité complémentaire d'éthylène.

La polymérisation est conduite soit en phase vapeur à des températures inférieures à 100 °C selon les techniques connues, soit en phase liquide à des températures supérieures à 140 °C, le polymère étant fondu ou dissous.

Les exemples suivants illustrent l'invention sans en limiter la portée :

Exemple 1.

Dans un autoclave en acier inoxydable d'un volume de 0,5l, muni d'une double enveloppe à circulation d'eau et d'un système d'agitation, préalablement purgé d'air et d'humidité et maintenu à 20 °C sous une pression d'éthylène de 0,1 MPa, on a introduit dans l'ordre 2,5 ml d'une solution contenant $4,5.10^{-4}$ mole de triéthylaluminium dans une fraction « hexènes » obtenue au cours d'une opération précédente (contenant en poids méthyl-3 pentène 33 %, hexène-1 12 %, éthyl-2 butène-1 55 %) puis 2,5 ml d'une solution contenant $1,5.10^{-4}$ mole de titanate de butyle et $3.10^{-4}$ mole de tétrahydrofuranne dans la même fraction « hexènes ». On porte ensuite la température à 55 °C et la pression à 2 MPa au moyen d'éthylène, et on maintient ces conditions pendant 4 heures, pendant lesquelles on a absorbé 225 g d'éthylène. On soumet ensuite le contenu de l'autoclave à une distillation fractionnée ce qui permet de recueillir 39 g d'éthylène non transformé et 172 g de butène-1, il reste dans le ballon 13 g d'un mélange d'hexènes et d'octènes contenant le catalyseur dissous. Cette solution servira à préparer le catalyseur destiné à la polymérisation.

Dans 373 ml d'heptane, on a introduit successivement $6,9 \ 10^{-3}$ mole de dichloroéthylaluminium et $5,7 \ 10^{-3}$ mole de butyléthylmagnésium dissous dans l'heptane. Au précipité jaune très pâle de chlorure de magnésium ainsi formé, on ajoute la solution de couleur brun foncé contenant le catalyseur ayant servi à la dimérisation, et on agite jusqu'à décoloration. On a repris 25 ml de cette suspension brun très clair qu'on a introduite dans un autoclave de 1,5 litre préalablement purgé d'air et d'humidité et maintenu à 60 °C. On a ensuite alimenté l'autoclave par un mélange contenant en poids 17 % de butène-1 et 83 % d'éthylène en maintenant la pression à 1,6 MPa.

Après 4 heures de réaction, on a obtenu 365 g de copolymère.

Exemple 2.

On a réalisé la dimérisation de l'éthylène dans les mêmes conditions et avec le même catalyseur que dans l'exemple 1, mais on n'a pas séparé les produits issus de la dimérisation.

Par ailleurs, dans 25 ml d'hexènes issus d'une opération précédente de dimérisation on a introduit $2,8 \ 10^{-3}$ mole de butyléthylmagnésium dissous dans de l'heptane et $5,6 \ 10^{-3}$ mole de chlorure de t-butyle. La suspension de chlorure de magnésium ainsi obtenue est décantée, le précipité est alors lavé 3 fois par 20 ml d'hexane, puis introduit dans le mélange brut issu de la dimérisation et agitée jusqu'à décoloration de la solution.

Les hydrocarbures sont séparés du catalyseur et fractionnés, l'éthylène et le butène-1 étant destinés à la polymérisation et les hexènes et octènes éliminés.

Le catalyseur solide est lavé 3 fois par 20 ml d'heptane et remis en suspension dans 400 ml d'heptane.

Dans un autoclave de 1,5 l préalablement purgé d'air et d'humidité et maintenu à 60 °C, on introduit 25 ml de la suspension de catalyseur et $1,2 \ 10^{-5}$ mole de sesquichlorure d'éthylaluminium. On a ensuite alimenté l'autoclave par un mélange contenant en poids 17 % de butène-1 et 83 % d'éthylène, en maintenant la pression à 1,5 MPa. Après 4 heures de réaction, on a obtenu 350 g de copolymère.

Exemple 3.

On a réalisé la dimérisation de l'éthylène comme dans l'exemple 1, mais on n'a pas séparé les produits issus de la dimérisation.

On a par ailleurs préparé de la même façon que dans l'exemple 1 une suspension de chlorure de magnésium dont on a introduit directement une quantité contenant $3,5 \ 10^{-4}$ mole dudit chlorure dans le produit brut de dimérisation. L'ensemble du mélange a été transféré dans un autoclave de 1,5 l qu'on a préssurisé à 1,5 MPa par de l'éthylène et on a porté la température à 60 °C.

Après 4 heures de réaction, on a obtenu 150 g de copolymère.

**Revendications**

1. Procédé de préparation d'un copolymère éthylène-butène-1, caractérisé en ce qu'il comprend les étapes suivantes :

a) dimérisation de l'éthylène en butène-1 par mise en contact de l'éthylène avec une solution d'un catalyseur résultant de l'interaction d'au moins un titanate d'alkyle de formule $Ti(OR'')_4$ dans laquelle R'' est un radical alkyle et d'au moins un composé d'aluminium de formule $AlR_3$ ou $AlR_2H$ dans laquelle chacun des restes R est un radical hydrocarbyle,

b) mise en contact d'au moins une partie de l'effluent de l'étape a), ladite partie contenant en solution au moins une partie du catalyseur de dimérisation, avec au moins un composé inorganique d'au moins un métal choisi dans le groupe formé par le magnésium et l'aluminium, ledit composé inorganique étant au moins en partie insoluble, de manière à obtenir un précipité constitué par ledit composé inorganique imprégné par les éléments du catalyseur de dimérisation,

c) lorsqu'un composé halogéné de l'aluminium n'est pas déjà présent dans le précipité obtenu à l'étape b), mise en contact dudit précipité avec au moins un composé halogéné de l'aluminium de formule $Al_2R'_{6-n}X_n$ dans laquelle R' est un radical hydrocarbyle, X est un atome d'halogène et n un nombre de 3 à 6,

d) mise en contact du produit obtenu à l'étape c) ou du produit obtenu à l'étape b) formé par au moins un composé inorganique au moins en partie insoluble, au moins un composé halogéné de l'aluminium et au moins un composé du titane avec de l'éthylène et du butène-1 au sein du réacteur de polymérisation.

2. Procédé selon la revendication 1 caractérisé en ce que l'effluent de dimérisation obtenu à l'étape a) est envoyé dans une zone de fractionnement dans laquelle on sépare :

α) au moins une fraction contenant du butène-1 et de l'éthylène, ladite fraction étant envoyée au réacteur de polymérisation,

β) au moins une fraction contenant des hexènes qui sont pour partie au moins utilisés comme solvant pour la préparation du catalyseur de dimérisation de l'étape a) et

γ) au moins une fraction contenant en solution le catalyseur ayant servi à la dimérisation.

3. Procédé selon la revendication 1 caractérisé en ce que l'effluent de dimérisation obtenu à l'étape a) est utilisé en totalité dans l'étape b) l'effluent obtenu à l'étape b) après séparation du précipité solide, est envoyé dans une zone de fractionnement dans laquelle on sépare :

α) au moins une fraction contenant du butène-1 et de l'éthylène, ladite fraction étant envoyée au réacteur de polymérisation, et

β) au moins une fraction contenant des hexènes qui sont pour partie au moins utilisés comme solvant pour la préparation du catalyseur de dimérisation de l'étape a).

4. Procédé selon la revendication 1 caractérisé en ce que l'effluent de dimérisation obtenu à l'étape a) est utilisé en totalité à l'étape b) la totalité du produit obtenu à l'étape b) est éventuellement envoyé à l'étape c) si un composé halogéné de l'aluminium n'est pas déjà présent, l'ensemble contenant de l'éthylène, du butène-1, des hexènes et un précipité en suspension formé par au moins un composé inorganique au moins en partie insoluble, au moins un composé halogéné de l'aluminium et au moins un composé de titane est envoyé en totalité au réacteur de polymérisation dans lequel ledit ensemble est mis en contact avec une quantité supplémentaire d'éthylène.

5. Procédé selon l'une des revendications 1 à 4 dans lequel le catalyseur de dimérisation de l'étape a) résulte de l'interaction d'au moins un titanate d'alkyle, d'au moins un composé d'aluminium de formule $AlR_3$ et $AlR_2H$ dans laquelle chacun des restes R est un radical hydrocarbyle et d'au moins un éther dans un solvant hydrocarboné.

6. Procédé selon l'une des revendications 1 à 5 dans lequel dans l'étape b) on utilise comme composé inorganique au moins un halogénure de magnésium, de préférence du chlorure de magnésium.

7. Procédé selon l'une des revendications 1 à 6 dans lequel dans l'étape b, on forme in-situ au moins un composé inorganique de magnésium par mise en réaction d'au moins un composé organique du magnésium avec au moins un composé halogéné.

8. Procédé selon la revendication 7 dans lequel on met en réaction au moins un organomagnésien ou son produit d'association avec un trialkylaluminium, avec au moins un halogénure d'aluminium ou un halogénure d'alkylaluminium.

9. Procédé selon l'une des revendications 1 à 8 dans lequel la quantité de composé inorganique employée à l'étape b) est de environ 0,1 à environ 100 grammes par millimole de titane présent.

10. Procédé selon l'une des revendications 1 à 9 dans lequel la quantité de composé halogéné de l'aluminium utilisée est telle que le rapport molaire ion halogénure/aluminium total est de environ 0,5 à environ 1,5 et le rapport molaire aluminium total/titane est de environ 2,5 à environ 25.

## Claims

1. A process for manufacturing an ethylene-1-butene copolymer, characterized by the following steps of :

a) dimerizing ethylene to 1-butene by contacting ethylene with a catalyst solution obtained by interaction of at least one alkyltitanate of formula $Ti(OR'')_4$ wherein R'' is an alkyl radical with at least one aluminum compound of formula $AlR_3$ or $AlR_2H$, wherein each of the radicals R is a hydrocarbyl radical,

b) contacting at least one portion of the effluent from step a), wherein at least a part of the dimerization catalyst is dissolved, with at least one inorganic metal compound whose metal is selected from the group formed of magnesium and aluminum, said inorganic compound being at least partly insoluble, so as to obtain a precipitate formed of said inorganic compound impregnated with the dimerization catalyst elements,

c) contacting said precipitate with at least one halogenated aluminum compound of formula $Al_2R'_{6-n}X_n$ wherein R' is a hydrocarbyl radical, X a halogen atom and n a number from 3 to 6, when the precipitate obtained in step b) does not already contain an halogenated aluminum compound,

d) contacting the product obtained in step c) or the product obtained in step b), formed of at least one inorganic compound, at least partly insoluble, at least one aluminum halogenated compound and at least one titanium compound, with ethylene and 1-butene within the polymerization reactor.

2. A process according to claim 1, characterized in that the dimerization effluent from step a) is fed to a fractionation zone wherein are separated :

α) at least one fraction containing 1-butene and ethylene, said fraction being fed to the polymerization reactor,

β) at least one fraction containing hexenes which are at least partly used as solvent for the preparation of the dimerization catalyst of step a), and

γ) at least one fraction wherein the catalyst already used for the dimerization is dissolved.

3. A process according to claim 1, characterized in that the dimerization effluent from step a) is used in totality in step b) and the effluent obtained from step b), after separation of the solid precipitate, is fed to a fractionation zone wherein are separated :

α) at least one fraction containing 1-butene and ethylene, said fraction being fed to the polymerization reactor, and

β) at least one fraction containing hexenes which are at least partly used as solvent for the preparation of the dimerization catalyst of step a).

4. A process according to claim 1, characterized in that the dimerization effluent obtained in step a) is used in totality in step b), the totality of the product obtained in step b) is optionally fed to step c), when an aluminum halogenated compound is not already present, the whole effluent, containing ethylene, 1-butene, hexenes and a suspended precipitate formed of at least one inorganic compound, at least partly insoluble, at least one halogenated aluminum compound and at least one titanium compound, is fed in totality to the polymerization reactor wherein said total effluent is contacted with an additional ethylene amount.

5. A process according to one of claims 1 to 4, wherein the dimerization catalyst of step a) results from the interaction of at least one alkyl titanate, at least one aluminum compound of formula $AlR_3$ or $AlR_2H$ wherein each of the radicals R is a hydrocarbyl radical and at least one ether in a hydrocarbon solvent.

6. A process according to one of claims 1 to 5, wherein the inorganic compound used in step b) consists of at least one magnesium halide, preferably magnesium chloride.

7. A process according to one of claims 1 to 6, wherein, in step b), at least one inorganic magnesium compound is formed in situ by reacting at least one organic magnesium compound with at least one halogenated compound.

8. A process according to claim 1, wherein at least one organomagnesium compound or its product of association with a trialkyl aluminum is reacted with at least one aluminum halide or one alkylaluminum halide.

9. A process according to one of claims 1 to 8, wherein the amount of inorganic compound used in step b) is from about 0.1 to about 100 grams per millimole of titanium.

10. A process according to one of claims 1 to 9, wherein the amount of halogenated aluminum compound is such that the molar ratio « halide ion/total aluminum » is from about 0.5 to about 1.5 and the molar ratio « total aluminum/titanium » is from about 2.5 to about 25.

**Patentansprüche**

1. Verfahren zur Herstellung eines Äthylen-Buten-1-Mischpolymeren, dadurch gekennzeichnet, daß es die folgenden Stufen umfaßt :

a) Dimerisierung von Äthylen zu Buten-1, indem man das Äthylen in Kontakt mit einer Lösung eines Katalysators bringt, der aus der Umsetzung von zumindest einem Alkyltitanat der Formel Ti(OR″)$_4$, worin R″ ein Alkylrest ist, und zumindest einer Aluminiumverbindung der Formel AlR$_3$ oder AlR$_2$H, worin jeder der Reste R ein Kohlenwasserstoffrest ist, stammt,

b) In Kontakt bringen mindestens eines Teils des Abflusses der Stufe a), wobei dieser Teil in Lösung zumindest einen Teil des Dimerisierungskatalysators enthält, mit zumindest einer anorganischen Verbindung von zumindest einem Metall aus der Gruppe Magnesium und Aluminium, wobei diese anorganische Verbindung zumindest teilweise unlöslich ist, derart, daß man einen Niederschlag erhält, der aus dieser anorganischen Verbindung, imprägniert mit den Elementen des Dimerisierungskatalysators, besteht,

c) falls in dem in Stufe b) erhaltenen Niederschlag nicht schon eine Halogenverbindung von Aluminium vorhanden ist, in Kontakt bringen dieses Niederschlags mit zumindest einer Halogenverbindung von Aluminium der Formel Al$_2$R′$_{6-n}$X$_n$, worin R′ ein Kohlenwasserstoffrest, X ein Halogenatom und n eine Zahl zwischen 3 und 6 sind,

d) in Kontakt bringen des in der Stufe c) erhaltenen Produkts oder des in Stufe b) erhaltenen Produkts, das gebildet ist aus zumindest einer anorganischen Verbindung, die zumindest teilweise unlöslich ist, zumindest einer halogenierten Verbindung von Aluminium und zumindest einer Verbindung von Titan mit Äthylen und Buten-1 in einem Polymerisationsreaktor.

2. Verfahren nach Anspruch 1, dadurch gekennzeichnet, daß der Abfluß der Dimerisierung, der in Stufe a) erhalten ist, in eine Fraktionierzone gebracht wird, in welcher man abtrennt :

α) zumindest eine Fraktion, welche Buten-1 und Äthylen enthält, wobei diese Fraktion zum Polymerisationsreaktor geführt wird,

β) zumindest eine Fraktion, welche die Hexene enthält, die mindestens teilweise als Lösungsmittel für die Herstellung des Katalysators der Dimerisierung in der Stufe a) verwendet werden und

γ) zumindest eine Fraktion, welche den Katalysator in Lösung enthält, welcher zur Dimerisierung gedient hat.

3. Verfahren nach Anspruch 1, dadurch gekennzeichnet, daß der Abfluß der Dimerisierung, der in Stufe a) erhalten ist, insgesamt für die Stufe b) verwendet wird und der Abfluß, der in Stufe b) erhalten ist, nach Abtrennung des ausgefallenen Feststoffes in eine Fraktionierzone geführt wird, worin man abtrennt :

α) zumindest eine Fraktion, welche Buten-1 und Äthylen enthält, wobei diese Fraktion zum Polymerisationsreaktor geführt wird, und

β) zumindest eine Fraktion, welche Hexene enthält, die mindestens teilweise als Lösungsmittel für die Herstellung des Dimerisierungskatalysators für die Stufe a) verwendet werden.

4. Verfahren nach Anspruch 1, dadurch gekennzeichnet, daß der Abfluß der Dimerisierung, der in Stufe a) erhalten ist, insgesamt in der Stufe b) verwendet wird, wobei die Gesamtheit des in Stufe b) erhaltenen Produktes gegebenenfalls zur Stufe c) geführt wird, wenn nicht schon eine Halogenverbindung von Aluminium vorliegt und die Gesamtheit, welche Äthylen, Buten-1, Hexene und einen Niederschlag in Suspensionen enthält, der durch zumindest eine zumindest teilweise unlösliche anorganische Verbindung, zumindest eine Halogenverbindung von Aluminium und zumindest eine Verbindung von Titan gebildet wird, insgesamt zum Polymerisationsreaktor geführt wird, worin diese Gesamtheit mit einer ergänzenden Menge Äthylen in Kontakt gebracht wird.

5. Verfahren nach einem der Ansprüche 1 bis 4, dadurch gekennzeichnet, daß der Dimerisierungskatalysator der Stufe a) von der Umsetzung von zumindest einem Alkyltitanat mit zumindest einer Aluminiumverbindung der Formel AlR$_3$ und AlR$_2$H, worin jeder der Reste R ein Kohlenwasserstoffrest ist, und zumindest einem Äther in einem Kohlenwasserstofflösungsmittel stammt.

6. Verfahren nach einem der Ansprüche 1 bis 5, dadurch gekennzeichnet, daß man in Stufe b) als anorganische Verbindung zumindest ein Magnesiumhalogenid, vorzugsweise Magnesiumchlorid verwendet.

7. Verfahren nach einem der Ansprüche 1 bis 6, dadurch gekennzeichnet, daß man in Stufe b) insitu zumindest eine anorganische Verbindung von Magnesium bildet, indem man zumindest eine organische Magnesiumverbindung mit zumindest einer Halogenverbindung umsetzt.

8. Verfahren nach Anspruch 7, dadurch gekennzeichnet, daß man zumindest eine magnesiumorganische Verbindung oder ihr Assoziationsprodukt mit einem Trialkylaluminium mit zumindest einem Aluminiumhalogenid oder einem Alkylaluminiumhalogenid umsetzt.

9. Verfahren nach einem der Ansprüche 1 bis 8, dadurch gekennzeichnet, daß die Menge an in Stufe b) verwendeter anorganischer Verbindung etwa 0,1 bis etwa 100 g/mmol des vorhandenen Titans beträgt.

10. Verfahren nach einem der Ansprüche 1 bis 9, dadurch gekennzeichnet, daß die Menge der verwendeten Halogenverbindung von Aluminium so ist, daß das molare Verhältnis Halogenion/Gesamtaluminium etwa 0,5 bis etwa 1,5 beträgt und das molare Verhältnis Gesamtaluminium/Titan etwa 2,5 bis etwa 25 beträgt.